# DEMANDE DE BREVET EUROPEEN

(11) **EP 2 074 896 A1**
(43) Date de publication de la demande: **01.07.2009**
(21) Numéro de dépôt: 08020701.2
(22) Date de dépôt: 28.11.2008
(51) Int. Cl.: A41D 1/02, A41D 19/00, A41D 27/00, A41D 27/08, A41D 27/24, B32B 7/08, D05C 17/00

(54) **Article de confection avec portion élastique**

(30) Priorité: 29.11.2007 FR 0708340
(71) Demandeur: SALOMON S.A.S., 74370 Metz-Tessy (FR)
(72) Inventeur: Vigny, Serge, 74570 Thorens-Gliéres (FR); Decarre, Valérie, 74370 Argonay (FR)

(57) **Abrégé**

Article de confection prévu pour être porté sur le corps humain comportant un panneau (3) destiné à constituer une surface dudit article de confection et une bande élastique (7) destinée à être placée sous ledit panneau caractérisé en ce que ledit panneau et ladite bande élastique (7) sont reliés l'un à l'autre par une broderie (4). Ladite bande élastique est de forme sensiblement allongée entre une première extrémité E1 et une deuxième extrémité E2, qu'entre ces deux extrémités E1 et E2, ladite broderie comprend au moins un fil (10, 15, 16) qui progresse depuis ladite première extrémité E1 et ladite deuxième extrémité E2 **caractérisé en ce que** la progression dudit fil a lieu vers l'avant, c'est-à-dire dans la direction définie entre la première extrémité E1 et la deuxième extrémité E2 ainsi que vers l'arrière, c'est-à-dire dans la direction définie entre la deuxième extrémité E2 et la première extrémité E1. Ladite broderie (4) comprend un fil (10) dont le parcours dessine au moins une boucle (14). L'article de confection peut être un gant, ladite broderie se trouvant dans la zone recouvrant le poignet. L'article de confection peut également être un blouson, ladite broderie se trouvant sur la ceinture

## Description

La présente invention concerne les articles de confection comportant des portions élastiques. Notamment la présente invention concerne les gants, les vestes de sport ou tout autre article de confection comportant une bande élastique.

Il est connu dans l'art antérieur d'équiper les gants avec des bandes élastiques pour permettre le serrage et l'adaptation morphologique de ces derniers sur le poignet de l'utilisateur.

Le document US 2004/0244092 décrit une telle paire de gant. On peut voir à la figure 2 de ce document que chaque gant comprend au moins deux bandes élastiques. La première se trouve au niveau de la base des doigts, la seconde se trouve à proximité de l'ouverture du gant. Ces bandes élastiques ne sont pas visibles car elles sont placées à l'intérieur du gant, mais elles sont repérables au deux coutures parallèles en zigzag qui traversent de part en part le gant.

La couture en zigzag est une caractéristique habituelle de l'intégration des bandes élastiques dans des articles de confection. Cette couture permet de relier un panneau textile à la bande élastique tout en conservant les propriétés de la bande élastique. En d'autres termes, grâce à cette couture, on donne au panneau textile des propriétés élastiques, alors que celui-ci ne possède pas de propriétés élastiques intrinsèques.

De manière connue, la couture d'une bande élastique sur un panneau est réalisée avec une machine à coudre traditionnelle. Le plus souvent, cette opération est assurée par un opérateur qui guide l'article de confection, sous la tête de la machine, cette dernière se chargeant de se décaler alternativement de part et d'autre de la direction de guidage pour réaliser le parcours en zigzag. Une telle couture en zigzag n'est pas très esthétique.

Les articles de confection sont soumis aux rythmes des modes qui changent régulièrement. De plus, les fabricants souhaitent embellir les articles qu'ils produisent pour en améliorer l'attractivité auprès des consommateurs. Il existe par conséquent un besoin de prévoir de nouveaux moyens et de nouveau support de décoration des articles de confection.

Il existe également un besoin d'améliorer la méthode de fabrication des articles de confection, en particulier d'augmenter la productivité et de réduire les coûts et les temps de production.

Il existe en outre un besoin d'assurer le serrage d'un article de confection pour qu'il s'adapte à la morphologie d'un utilisateur, tout comme il existe un besoin d'assurer l'expansion de certaine portion dudit article de confection pour en faciliter la mise en place par l'utilisateur.

La présente invention a pour objectif de répondre aux différents besoins mentionnés ci-dessus.

La présente invention a également pour objectif de remédier aux inconvénients de l'art antérieur.

La présente invention a pour objectif de relier entre eux un panneau d'un article de confection à une bande élastique.

La présente invention a pour objectif d'améliorer l'aspect esthétique d'un article de confection.

L'objectif de la présente invention est atteint par la fourniture d'un article de sport.

L'objectif de la présente invention est atteint par la mise en place d'une bande élastique sous l'un des panneaux constituant l'article de confection et par le fait que ledit panneau et ladite bande élastique sont reliés par une broderie.

L'objectif de l'invention est également atteint par la fourniture d'un article de confection prévu pour être porté sur le corps humain comportant un panneau destiné à constituer la surface dudit article de confection et une bande élastique destinée à être placée sous ledit panneau, ledit panneau et ladite bande élastique étant reliés l'un à l'autre par une broderie.

Dans un mode de réalisation de l'invention, ladite bande élastique est, selon une direction au moins, susceptible d'accroître sa longueur d'une valeur supérieure à 15 %.

Dans un mode de réalisation de l'invention, ladite bande élastique est de forme sensiblement allongée entre une première extrémité E1 et une deuxième extrémité E2, qu'entre ces deux extrémités E1 et E2, ladite bande élastique comprend une pluralité de sections S juxtaposées les unes à côté des autres et que ladite broderie comprend au moins un fil de couture qui traverse une ou plusieurs des dites sections S ; le parcours dudit fil étant tel qu' au moins une des dites section S est traversée deux fois par ledit fil de couture.

Dans un mode de réalisation de l'invention, ladite broderie comprend un fil dont le parcours dessine au moins une boucle.

Dans un mode de réalisation de l'invention, ladite bande élastique est de forme sensiblement allongée entre une première extrémité E1 et une deuxième extrémité E2, qu'entre ces deux extrémités E1 et E2, ladite broderie comprend au moins un fil qui progresse depuis ladite première extrémité E1 et ladite deuxième extrémité E2, la progression dudit fil a lieu vers l'avant, c'est-à-dire dans la direction définie entre la première extrémité E1 et la deuxième extrémité E2 ainsi que vers l'arrière, c'est-à-dire dans la direction définie entre la deuxième extrémité E2 et la première extrémité E1.

Dans un mode de réalisation de l'invention, l'article de confection est un gant et ladite broderie se trouve dans la zone recouvrant le poignet.

Dans un autre mode de réalisation de l'invention, l'article de confection est un blouson et ladite broderie se trouve sur la ceinture.

Par broderie on entend une ornementation réalisée avec un ou plusieurs fils sur un tissu ou par extension sur toute matière se présentant sous forme de feuille et utilisée pour la réalisation des articles de confection (par exemple : cuir ou matière synthétique).

Lorsqu'il s'agit d'articles de confection réalisés en grande série et/ou industriellement, les broderies sont réalisées avec des machines à broder.

L'invention sera mieux comprise à la lecture de la description jointe aux dessins dans lesquels :
- la figure 1 est une vue de dessus d'un gant selon l'invention,
- la figure 2 est une vue de côté du gant représenté à la figure 1,
- la figure 3 est une vue partielle lorsque la bande élastique est en position de repos,
- la figure 4 est une vue partielle lorsque la bande est en position étendue,
- la figure 5 est une vue d'ensemble d'un blouson selon l'invention,
- La figure 6 est une vue en coupe partielle du blouson de la figure 5.

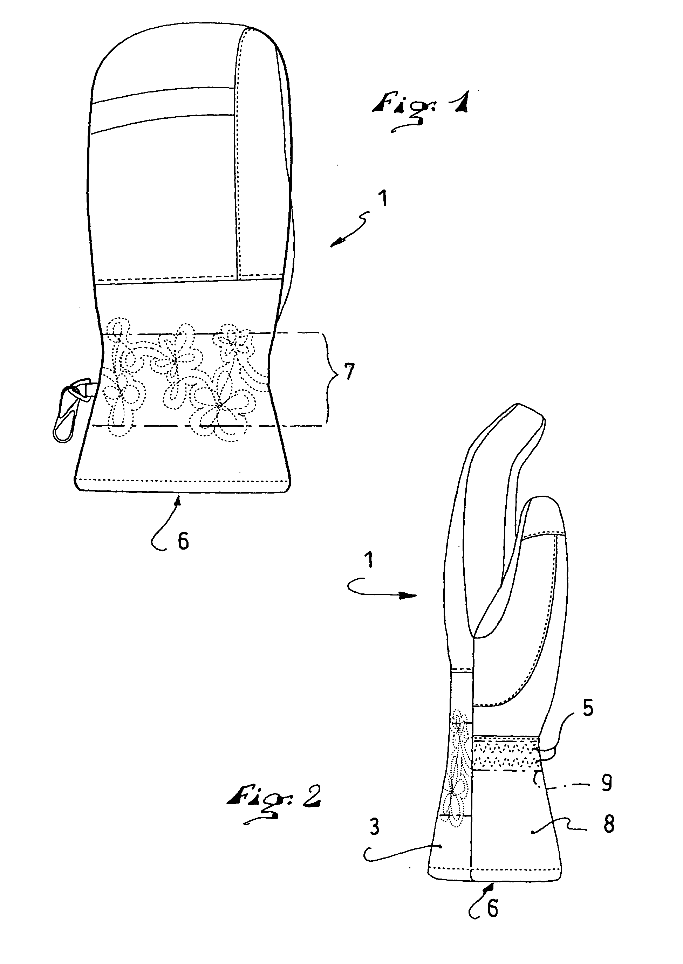

La figure 1 décrit un article de confection selon un mode de réalisation de l'invention. Il s'agit d'un gant conçu pour la pratique des sports d'hiver.

La surface extérieure du gant est constituée par l'assemblage d'une pluralité de panneaux textile. L'assemblage des panneaux est fait par couture. Cependant il peut également être fait par collage ou soudure.

Les matériaux choisis sont généralement des tissus bien que tout matériau qui ne serait pas tissé mais qui est couramment utilisé dans la confection peut convenir comme par exemple du cuir ou des matériaux synthétiques.

Le gant 1 comprend une ouverture 6 permettant à l'utilisateur d'insérer sa main. Au moment de l'insertion, la zone du poignet 7 s'élargit de façon à permettre le passage de la partie la plus large et volumineuse de la main, c'est-à-dire la paume. Une fois que la main est en place dans le gant, la zone du poignet se resserre automatiquement grâce aux bandes élastiques qui sont placées sous les panneaux.

Le resserrement de la zone du poignet 7 autour du poignet permet de garantir que le gant va rester en place sur la main. Cela permet également l'étanchéité thermique en empêchant l'air froid de pénétrer à l'intérieur du gant 1.

Parmi les différents panneaux constituant la surface externe du gant 1, se trouvent, dans la zone du poignet, un panneau externe 3, destiné à recouvrir le côté externe du poignet et un panneau interne 8, destiné à recouvrir le côté interne du poignet.

Le panneau interne 8 est relié comme cela est connu dans l'art antérieur à une bande élastique interne 9. La bande élastique interne 9 est représentée en trait mixte fin à la figure 2. Deux coutures zigzag 5 relient le panneau interne 8 à la bande élastique interne 9. Chacune des coutures en zigzag est constituée par un fil de couture qui traverse de part en part le panneau interne 8 selon un parcours en zigzag. Ledit parcours consiste en une multitude de pointes ayant un angle aigu et juxtaposées les unes à côté des autres. Lorsque le gant est en position de repos, c'est-à-dire que la zone du poignet 7 n'est pas dilatée les angles sont plus petits que 90°.

Lorsque la zone du poignet 7 est dilatée, les angles des pointes que constitue la couture zigzag sont plus grands et ils se rapprochent, égalent ou dépassent la valeur de 90°.

Esthétiquement, les coutures en zigzag 5 du panneau interne 8 font irrésistiblement penser à la fonction qu'elles remplissent, à savoir, relier le panneau interne 8 à une bande élastique. C'est exactement le contraire qui se passe sur le panneau externe 3 qui cumule alors une belle esthétique et la fonction élastique recherchée.

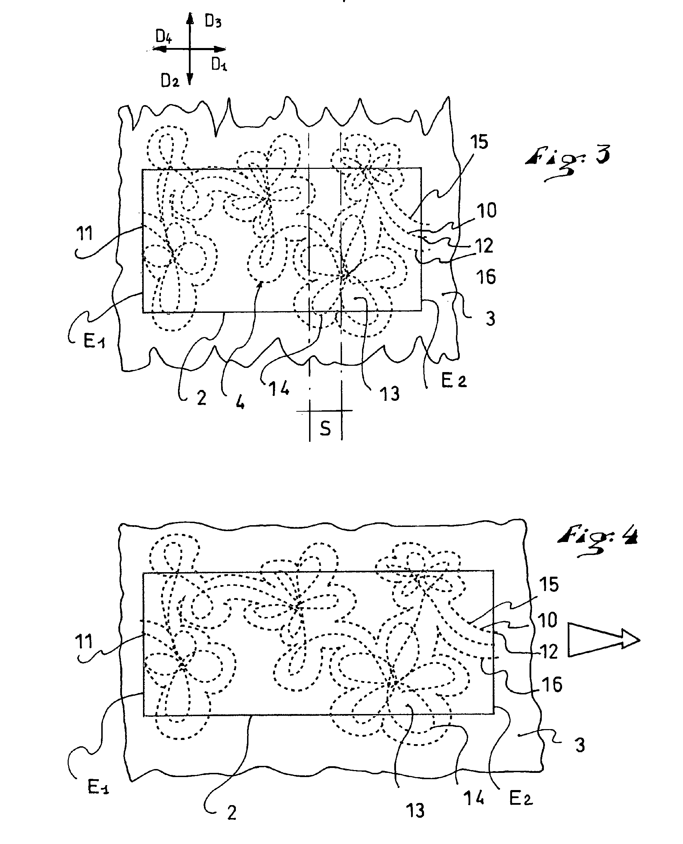

Les figures 3 et 4 montrent une vue partielle du panneau externe 3 et de la bande élastique externe 2 successivement à l'état de repos (figure 3) et à l'état dilaté (figure 4).

La bande élastique externe 2 est choisie de telle façon qu'elle puisse subir un allongement réversible d'au moins 10 % de sa longueur, de préférence supérieur à 15 % de sa longueur.

Les vues 3 et 4 sont des vues de dessous, elles permettent la visualisation de la bande élastique externe 2. La bande élastique externe 2 a une forme allongée, sensiblement celle d'un rectangle bien que ceci ne soit pas une caractéristique limitative. En tout état de cause, elle est délimitée par deux extrémités E1 (première extrémité) et E2 (deuxième extrémité).

Entre les extrémités E1 et E2 on définit une pluralité de section S, lesquelles sont juxtaposées les unes à côtés des autres. A titre d'exemple, une de ces sections est représenté à la figure 3.

Conformément à l'invention, le panneau externe 3 et la bande élastique interne 2 sont reliés l'un à l'autre par une broderie 4.

La broderie 4 se différentie de la simple couture de part la complexité du parcours que peut prendre le fil.

La broderie est réalisée industriellement par des machines qui, soit possèdent des têtes porteuses d'aiguille qui peuvent se déplacer dans toutes les directions, ou soit qui disposent de cadres supportant le panneau à broder qui peuvent se déplacer dans toutes les directions.

A contrario, une machine à coudre classique a une tête fixe ou pouvant se déplacer latéralement et un dispositif permettant de faire progresser le panneau sur lequel est réalisé la couture.

Dans le mode de réalisation de l'invention décrit ici, la broderie 4 est constituée par 3 fils qui décrivent un parcours non régulier, qui bien qu'ils possèdent chacun une origine au niveau de l'extrémité E1 et une fin au niveau de l'extrémité E2, progressent entre l'origine et la fin, dans toutes les directions.

Parmi ces 3 fils, le premier fil 10 est celui qui décrit le parcours le plus compliqué. En effet, dans sa progression depuis l'origine 11 jusqu'à la fin 12, on peut voir qu'il progresse vers l'avant (direction D1), vers le bas (direction D2), vers le haut (direction D3) mais également vers l'arrière (direction D4).

Le parcours que fait le premier fil 10 correspond à une succession de fleurs.

Une de ces fleurs est référencée à la figure 3 avec le signe de référence 13. On peut voir que selon sa progression depuis l'origine 11 jusqu'à la fin 12, le premier fil 10 arrive de la fleur précédente, dessine la fleur 13 en faisant cinq bandes formées qui représentent chacune un des pétales de la fleur, puis repart en direction de la fleur suivante, laquelle est placée au dessus de la fleur 13.

A chaque fois que le fil réalise une boucle fermée, comme par exemple celle référencée du signe 14 à la figure 3, il est clair que le fil a progressé dans les 4 directions D1, D2, D3 et D4.

En d'autres termes, si on considère la section S de la bande élastique dans laquelle se trouve la boucle 14, on peut dire que dans sa progression depuis l'origine 11 jusqu'à la fin 12, le fil traverse, au moins, deux fois ladite section S. On notera, en l'occurrence que dans le mode de réalisation décrit, le premier fil 10 traverse cinq fois la section S.

Le deuxième fil 15 suit un parcours qui enveloppe par le haut le dessin du premier fil 10 tandis que le troisième fil 16 suit un parcours qui enveloppe par le bas le même dessin.

A un moment ou à un autre de leur progression depuis l'extrémité E1 jusqu'à l'extrémité E2, le deuxième fil 15 et le troisième fil 16 progresse dans la direction D4, c'est-à-dire vers l'arrière (la direction avant étant définie comme celle reliant l'extrémité E1 à l'extrémité E2).

En d'autres termes, pour chacun des deuxième et troisième fil, on peut trouver une section de la bande élastique externe 2 qui est traversée au moins deux fois par ledit fil.

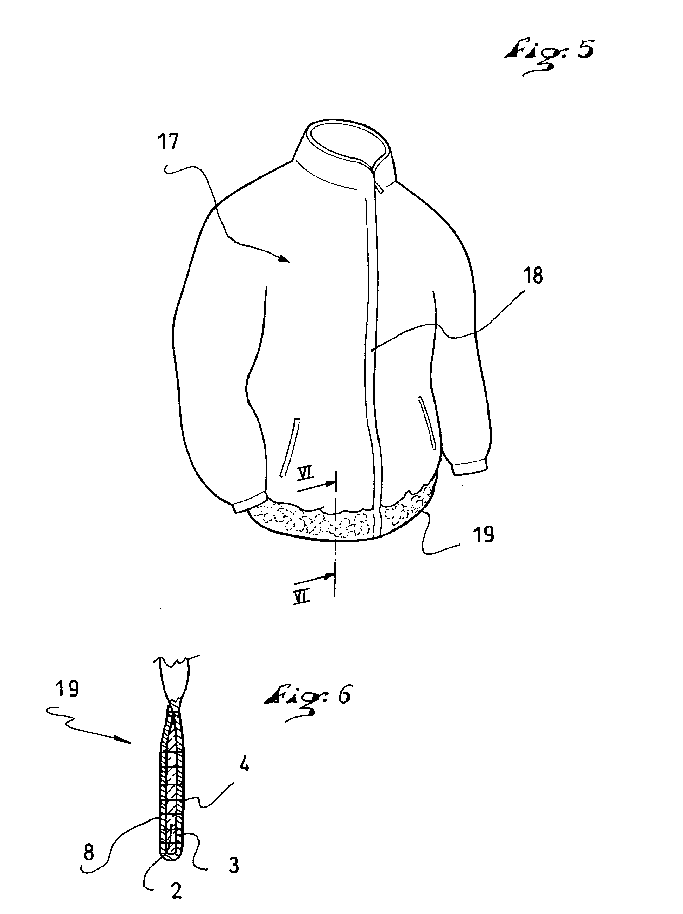

La figure 5 décrit un deuxième mode de réalisation de l'invention. Il s'agit d'un blouson 17 prévu pour la pratique sportive et notamment pour la pratique des sports d'hiver.

De manière connue, le blouson 17 comprend un corps principal, deux manches, une ouverture extérieure 18 et une ceinture 19.

Comme le montre la figure 6, la ceinture 19 comprend un panneau externe 3 en matière textile ou équivalente, une bande élastique 2 et un panneau interne 8.

Conformément à l'invention, la liaison entre le panneau externe 3 est réalisée par une broderie 4. La broderie 4 représente une succession de fleurs.

Dans un autre mode de réalisation, la broderie est réalisée pour relier une bande élastique à la jupette pare-neige qui est placée à l'intérieur d'un blouson de ski.

Dans un autre mode de réalisation la broderie reliant le panneau à une bande élastique se trouve sur les guêtres. Lesdites guêtres peuvent être indépendantes ou fixées à la partie basse d'un pantalon de ski.

## Revendications

1. Article de confection prévu pour être porté sur le corps humain comportant un panneau (3) destiné à constituer une surface dudit article de confection et une bande élastique (7) destinée à être placée sous ledit panneau (3) **caractérisé en ce que** ledit panneau et ladite bande élastique sont reliés l'un à l'autre par une broderie (4) et **en ce que** ladite bande élastique (7) est de forme sensiblement allongée entre une première extrémité E1 et une deuxième extrémité E2, qu'entre ces deux extrémités E1 et E2, ladite bande élastique comprend une pluralité de sections S juxtaposées les unes à côté des autres et que ladite broderie comprend au moins un fil de couture (10, 15, 16) qui traverse une ou plusieurs des dites sections S ; **caractérisé en ce que** le parcours dudit fil de couture est tel qu' au moins une des dites section S est traversée deux fois par ledit fil de couture.

2. Article de confection selon la revendication précédente **caractérisé en ce que** ladite bande élastique (7) est, selon une direction au moins, susceptible d'accroître sa longueur d'une valeur supérieure à 15 %.

3. Article de confection selon l'une des revendications 1 à 2 **caractérisé en ce que** ladite broderie (4) comprend un fil dont le parcours dessine au moins une boucle (14).

4. Article de confection selon l'une des revendications 1 ou 2 **caractérisé en ce que** ladite bande élastique (7) est de forme sensiblement allongée entre une première extrémité E1 et une deuxième extrémité E2, qu'entre ces deux extrémités E1 et E2, ladite broderie comprend au moins un fil (10, 15, 16) qui progresse depuis ladite première extrémité E1 et ladite deuxième extrémité E2 **caractérisé en ce que** la progression dudit fil a lieu vers l'avant, c'est-à-dire dans la direction définie entre la première extrémité E1 et la deuxième extrémité E2 ainsi que vers l'arrière, c'est-à-dire dans la direction définie entre la deuxième extrémité E2 et la première extrémité E1.

5. Article de confection selon l'une des revendications précédentes, **caractérisé en ce qu'**il s'agit d'un gant (1) et **en ce que** ladite broderie se trouve dans la zone recouvrant le poignet.

6. Article de confection selon l'une des revendications précédentes, **caractérisé en ce qu'**il s'agit d'un blouson (17) et **en ce que** ladite broderie se trouve sur la ceinture.
